# EUROPEAN PATENT SPECIFICATION

(11) **EP 2 138 074 B1**
(45) Date of publication and mention of the grant of the patent: **21.05.2014**
(21) Application number: 09380062.1
(22) Date of filing: 30.03.2009
(51) Int. Cl.: A47G 19/00, A47G 19/02, A47J 43/24

(54) **Foldable receptacle for domestic use**
Faltbarer Behälter für den Hausgebrauch
Réceptacle pliant pour une utilisation domestique

(30) Priority: 09.04.2008 ES 200800733 U
(43) Date of publication of application: 30.12.2009
(73) Proprietor: SP BERNER PLASTIC GROUP, S.L., 46960 Aldaia (Valencia) (ES)
(72) Inventor: Escarpa Gil, Julian, 46960 Aldaia (Valencia) (ES)
(74) Representative: Ungria López, Javier

(56) References cited:
- WO-A1-93/23301
- WO-A1-94/24002
- US-A- 5 860 556

## Description

As stated in the title of this descriptive specification, the present invention relates to a foldable receptacle for domestic use, specifically for creating a culinary receptacle suitable for fitting a lid on in order to permit its use in different applications.

The object of the invention is to achieve an optimum folding or collapsing of the receptacle in order to improve its features with respect to other known receptacles.

### BACKGROUND OF THE INVENTION

Although different types of receptacles are known that can be folded or collapsed in order to reduce their volume when not in use, or even for permitting their coupling one to another with a reduction in volume, nevertheless the receptacle of the invention is based on that described in Spanish Utility Model U200701289 from the same applicant, in which the actual receptacle has its side wall defined by several consecutive sections, and in which the intermediate section is in turn defined by short sections of lesser thickness than the other sections located both, above and below, that multiple intermediate section, all this in order to provide a high folding capacity due to the effect of pressure applied by the user in order to produce the folding or collapsing of the actual receptacle.

It also includes other characteristics related to the form of hermetic coupling and retention of a sealing lid, in order to permit warming up and even cooking of food products in microwave ovens.

The receptacle likewise presents another characteristic related to an intermediate and internal plateau established by a bend in its wall, for resting a plate, a colander, etc.

As well as other characteristics corresponding to the receptacle described in that Utility Model U200701289, which are not worth mentioning, it is important to highlight the fact that its folding capacity depends partly on the force of pressure applied by the user, which implies that the folding operation can be carried out with difficulty.

Document US 5.860.556 describes a collapsible storage container having a side wall comprising upper and lower portions separated by a peripheral fold line having a side-ways S-shaped geometry such that the upper and lower portions are movable relative to one another.

### DESCRIPTION OF THE INVENTION

The foldable receptacle forming the object of the invention, preferably useable in the domestic sphere, is based on that referred to in the previous section, in other words, that described in Utility Model U200701289, but with a series of innovations from which derive advantages that will be explained in the course of the present description.

More specifically, the receptacle of the invention, having preferably a circular or oval outline, comprises three sections of side wall, where the upper and lower section are of greater thickness than the intermediate wall section.

As a first novel characteristic, provision has been made for that intermediate wall section of the receptacle to have a variable thickness along its perimetric extension, starting from a unit thickness of 100% and being reduced to 50% when arriving at its lower limit.

Another novel characteristic consists of the fact that the intersection between the upper wall section and the intermediate wall section mentioned above is established by means of an inner-outer double stagger which takes the form of a zigzag, the projection of the inner wall of the upper section being the one that continues as the projection of the outer wall of the lower section, defining two opposite staggers; in other words, in a zigzag.

That double stagger gives rise to a perimetric zone of intersection with notably less wall thickness than the upper and lower parts meeting it, facilitating the folding of the side wall via said stagger. Moreover, due to the special configuration defining that stagger, optimum cleanliness of the actual receptacle will be achieved.

In this way, greater collapsing/foldable power or capacity is obtained for the receptacle due to the effect of pressure applied by the user in order to produce the actual folding.

### BRIEF DESCRIPTION OF THE DRAWINGS

In order to complement the description that is going to be made forthwith, and with the aim of facilitating a better understanding of the characteristics of the invention, this specification is accompanied by a set of drawings on the basis of which the innovations and characteristics of the foldable receptacle for domestic use, embodied in accordance with the object of the invention, will be more easily understood.

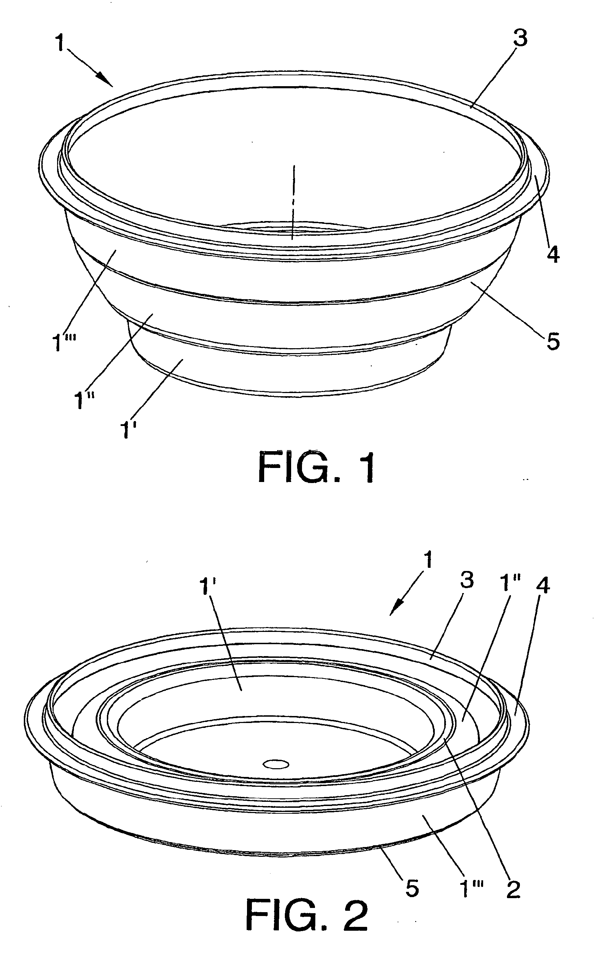

**Figure 1****.-** Shows a general perspective view of the receptacle of the invention.
**Figure 2****.-** Shows another perspective view of the same receptacle as in the previous figure in the folded position.

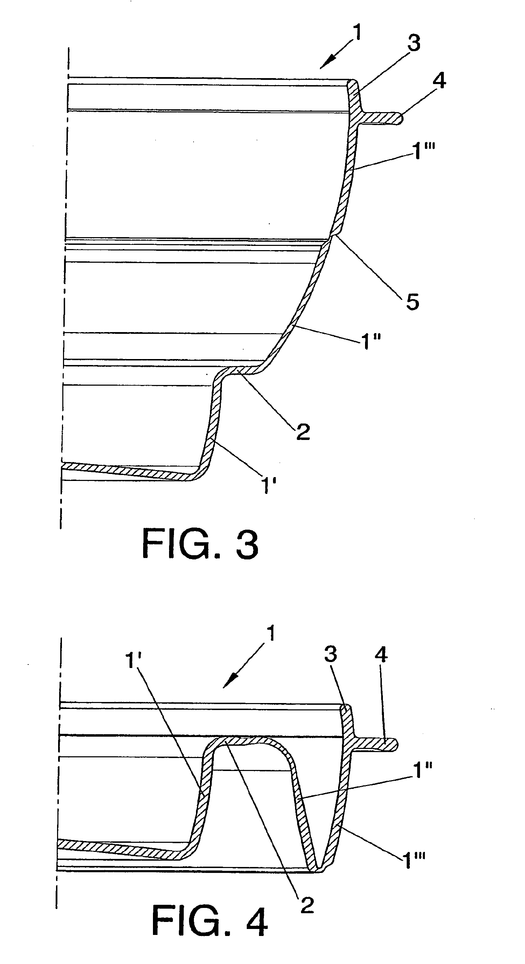

**Figure 3****.-** Shows a cross-section view of the receptacle represented in figure 1.
**Figure 4****.-** Shows a cross-section view of the receptacle represented in figure 2.

### DESCRIPTION OF THE PREFERRED FORM OF EMBODIMENT

As can be seen from the figures, the receptacle 1 of the invention, being able to have a circular or oval outline, has its side wall defined by three sections 1', 1" and 1''', contiguous with each other, the lower section 1' being of the same thickness as the upper section 1''', and both being thicker than the intermediate section 1", with the particular feature that a step is defined between the lower section 1' and intermediate section 1" giving rise to an annular and inner plateau 2 for resting a plate, a colander, etc., located inside the actual receptacle 1, which, moreover, further comprises a perimetric and upper flange 3 and a perimetric and outer wing 4 located beneath that flange 3, all this in such a way that this receptacle, made from a suitable material, can be complemented with an hermetic sealing lid that can be coupled to that flange 3 in order to cook food.

So, the said container or receptacle, which is foldable or collapsible, presents the particular feature that the intermediate wall section 1", from its lower end to its upper end, in other words, from its intersection with the lower section 1' up to its intersection with the upper section 1''', progressively increases in thickness, starting with a minimum thickness until reaching a thickness that is close to that of the actual upper section 1''', this variation in thickness being progressive and uniform along the entire intermediate section 1", with the particular feature that the thickness of the lower part of that intermediate section 1" is roughly half the thickness of the upper part of that same section 1".

The intersection between said intermediate section 1" and the upper section 1''' is carried out by means of a double stagger in a zigzag 5 which, in combination with the progressive increase in thickness of that wall section from the lower part to the upper part, achieves a high capacity for collapsing/folding due to the effect of pressure applied by the user in order to produce the actual folding of the receptacle.

## Claims

1. **FOLDABLE RECEPTACLE FOR DOMESTIC USE,** in which the side wall comprises three consecutive sections (1', 1", 1''') which allow folding and consequent reduction in height, with a step (2) being defined internally in the zone of intersection of the lower section (1') with the intermediate section (1"), said step (2) defining a support plateau for another receptacle stacked on top or possibly for a colander, a plate or similar, the upper part of the opening having an upper and slightly convergent flange or extension (3) and a perimetric wing (4) with rounded edges, in order to permit the correct positioning of a sealing lid, the intersection between the intermediate section (1") and the upper section (1") of the side wall is defined by a perimetric zigzag stagger (5) towards the inside and towards the outside, which helps with the folding of said intermediate section (1 "), with respect to the upper section (1'") **characterized in that** the intermediate section (1") of the side wall of the receptacle (1) presents a variable thickness which progressively increases from the lower end to the upper end of said intermediate section (1 "), the progression in the difference of thickness from one end to the other being 50%.

2. **FOLDABLE RECEPTACLE FOR DOMESTIC USE**, according to claim 1, **characterized in that** the maximum thickness of the upper end of the intermediate section (1") of the side wall is equal to or less than the thickness of the upper section (1''') of said side wall.

## Patentansprüche

1. Faltbarer Behälter für den Hausgebrauch, in dem die Seitenwand drei aufeinander folgende Abschnitte (1', 1", 1"') umfasst, die ein Falten und eine dadurch bedingte Höhenreduktion ermöglichen, wobei eine Stufe (2) intern in der Übergangszone zwischen dem unteren Abschnitt (1') und dem mittleren Abschnitt (1") definiert ist, wobei die Stufe (2) ein Halteplateau für einen anderen darüber gestapelten Behälter oder für ein Sieb, einen Teller oder ähnliches definiert, wobei der obere Teil der Öffnung einen oberen und etwas zusammenlaufenden Flansch oder Erweiterungsteil (3) und einen Umfangsflügel (4) mit gerundeten Kanten aufweist, um eine korrekte Positionierung eines abdichtenden Deckels zu gestatten, wobei der Übergang zwischen dem mittleren Abschnitt (1 ") und dem oberen Abschnitt (1"') der Seitenwand durch einen sich nach innen und nach außen erstreckenden Umfangs-Zickzackteil (5) definiert wird, der das Falten des mittleren Abschnitts (1") in Bezug auf den oberen Abschnitt (1"') unterstützt, **dadurch gekennzeichnet, dass** der mittlere Abschnitt (1") der Seitenwand des Behälters (1) eine variable Dicke vorsieht, die zunehmend von dem unteren Ende zu dem oberen Ende des mittleren Abschnitts (1") hin größer wird, wobei die Zunahme in der Dickendifferenz von dem einen Ende zu dem anderen Ende 50% beträgt.

2. Faltbarer Behälter für den Hausgebrauch nach Anspruch 1, **dadurch gekennzeichnet, dass** die maximale Dicke des oberen Endes des mittleren Abschnitts (1") der Seitenwand gleich oder kleiner als die Dicke des oberen Abschnitts (1"') der Seitenwand ist.

## Revendications

1. Réceptacle pliant pour une utilisation domestique, dans lequel la paroi latérale comprend trois sections consécutives (1', 1", 1"') qui permettent le pliage et la réduction de poids consécutive, avec un échelon (2) qui est défini intérieurement dans la zone d'intersection de la section inférieure (1') avec la section intermédiaire (1"), ledit échelon (2) définissant un plateau de support pour un autre réceptacle empilé sur le dessus ou éventuellement pour une passoire, un plat ou similaire, la partie supérieure de l'ouverture ayant une bride ou extension (3) supérieure et légèrement convergente et une aile périmétrale (4) avec des bords arrondis, afin de permettre le bon positionnement d'un couvercle d'étanchéité, l'intersection entre la section intermédiaire (1") et la section supérieure (1"') de la paroi latérale est définie par un décalage périmétral en zigzag (5) vers l'intérieur et vers l'extérieur, qui aide au pliage de ladite section intermédiaire (1"), par rapport à la section supérieure (1"'), **caractérisé en ce que** la section intermédiaire (1") de la paroi latérale du réceptacle (1) présente une épaisseur variable qui augmente progressivement de l'extrémité inférieure à l'extrémité supérieure de ladite section intermédiaire (1"), la progression de différence d'épaisseur d'une extrémité à l'autre étant de 50%.

2. Réceptacle pliant pour une utilisation domestique, selon la revendication 1, **caractérisé en ce que** l'épaisseur maximum de l'extrémité supérieure de la section intermédiaire (1") de la paroi latérale est égale à ou inférieure à l'épaisseur de la section supérieure (1"') de ladite paroi latérale.
